# EUROPEAN PATENT SPECIFICATION

(11) **EP 1 973 335 B1**
(45) Date of publication and mention of the grant of the patent: **20.07.2011**
(21) Application number: 08251031.4
(22) Date of filing: 20.03.2008
(51) Int. Cl.: H04N 1/54

(54) **A printing process**
Druckvorgang
Procédé d'impression

(30) Priority: 22.03.2007 GB 0705513
(43) Date of publication of application: 24.09.2008
(60) Divisional application: 11003687.8
(73) Proprietor: LFH Brand Identity Consultants Limited, London W1F OUT (GB)
(72) Inventor: Hawkins, Graham, London W2H 2HD (GB)
(74) Representative: Evans, Claire

(56) References cited:
- US-A1- 2003 007 164
- US-A1- 2006 022 994
- STOLLNITZ E J ET AL: "Reproducing Color Images Using Custom Inks" PROCEEDINGS OF SIGGRAPH 98: 25TH INTERNATIONAL CONFERENCE ON COMPUTER GRAPHICS AND INTERACTIVE TECHNIQUES, 19 July 1998 (1998-07-19), pages 267-274, XP002531570 ISBN: 0-89791-999-8
- ANONYMOUS: "Ink innovation can cut packaging costs, says UK group"[Online] 11 September 2008 (2008-09-11), pages 1-2, XP002531571 Retrieved from the Internet: URL:http://www.foodproductiondaily.com/Pro duct-Categories/Packaging-Materials/Ink-in novation-can-cut-packaging-costs-says-UK-g roup> [retrieved on 2009-06-10]

## Description

The invention relates to a printing process for use in printing branded packaging.

Standard printing (eg, all magazine-printing) uses four standard printing inks called 'process colours'. These process colours are cyan, magenta, yellow and black, and they are mixed to produce the standard 'process' range of colours.

'Spot colours' are non-process colours, that is, colours which cannot be formed from the four standard printing inks. They are normally specified in colour systems such as the Pantone system, which consists of 1,114 predetermined selectable colours. However, sometimes a spot colour may be specifically developed on a bespoke basis.

Designers use spot colours for extra visual impact. Spot colours are often chosen for use as 'brand colours' in branded packaging, that is, the colours which define a brand and help it to be differentiated from other brands, as they are less common than the process range of colours. However, the ink for each spot colour must be ordered separately. This means that many different printing inks are often required when printing branded packaging, thereby increasing costs.

The article "Reproducing Colour Images Using Custom Inks" by Stollnitz EJ et al from the Proceedings of Siggraph 98: 25th International Conference on Computer Graphics and Interactive Techniques, 19 July 1998, pages 267-274 discloses a process which aims to allow custom inks (i.e. spot colours) to be used in a colour printing process taking into account the nature of the inks and the substrate to which the ink is applied. Thus, on page 6 of this article in the paragraph headed "Selecting Inks" it is stated, "our goal... is to find the optional combination of paper and inks for a given image".

In the process of this document, a first algorithm is applied to the image which is to be printed to quantise the image to about 2000 colours. A second algorithm is then applied to various combinations of paper and inks selected from the quantised image and an iterative process is used to place the various combinations in order in terms of printing performance. The gamut of printable colours obtainable for a particular combination of inks and paper is then calculated for the best performers

US2003/007164 discloses a process which aims to improve the appearance of printing on unbleached corrugated cardboard packaging. This is done by using two transparent inks, and (optionally) a masking ink. The colours of the inks are selected by converting a red/green/blue image into a cyan/magenta/yellow image, selecting the two dominant colours in the resulting image and choosing the spot colours which are closest to those two colours for the transparent inks.

It is an object of the invention to seek to reduce the costs of printing branded packaging.

Accordingly, the invention provides a process for use in printing a range of branded packaging, the process comprising the steps of:
a. identifying each of the inks presently used in printing the range of branded packaging by obtaining this information from the artwork for each item in the range of branded packaging;
b. selecting a palette of inks consisting of a group of possible spot inks and a group of possible process inks, and testing possible combinations of those inks to see how closely it is possible to match the colours of the identified inks to within a specified tolerance;
c. specifying the colours which are required to be reproduced when printing the range of branded packaging either by deciding that they should be the same as the colours of the identified inks or by omitting one of the inks or approximating one or more of the colours of the identified inks;
d. selecting a palette of inks consisting of a group of possible spot inks and a group of possible process inks, and testing possible combinations of those inks to see how closely it is possible to match the required colours to within the specified tolerance, taking into account the results of the previous test when selecting the inks to be tested; and
e. repeating steps c and d until a palette of inks has been obtained which consists of the minimum number of inks which can be can be mixed to obtain the required colours to within the specified tolerance.

The colours of the inks which form the palette of inks at the end of the process are called the 'palette' colours.

Once the inks presently used in printing the range of branded packaging have been identified, the identified inks may be listed in order of the decreasing importance of the colours of those inks to the brand.

The inks which are allocated primary importance may be the inks having colours which define the brand. These colours are called the 'brand colours'. They are usually spot colours.

The inks which are allocated secondary importance may be the inks having colours which are used in the text of the brand. These colours are called the 'brand text colours'. They are also usually spot colours.

The inks which are allocated tertiary importance may be the inks having colours which are used in the general text and colour ways. These inks are usually spot colour inks, but this is not always the case.

The inks having colours which are used in the graphical elements of the brand may be allocated either primary or secondary importance. These colours are called the 'graphical colours'. They are often inks from the range of process colour inks, but this is not always the case.

The most important spot colours will us usually be brand colours. These are the colours for which it is particularly important to achieve a close match. Four spot colour inks are usually selected.

The most important process colours will be those colours which must be mixed to obtain the graphical colours identified in the brand. Three or four process colour inks are usually selected.

In steps b and d, priority may be given to the inks having the colours which are most important to the brand. By including the inks having the most important colours in the palette of inks, it becomes possible to achieve the closest match for those colours.

The spot inks selected in steps b and d may be altered to take into account the process inks which have been selected.

The list of required colours specified in step c will usually correspond substantially to the colours of the list of identified inks. However, the required colours may be altered during step c. The required colours may be altered according to their order of importance in the list of identified colours. Thus, if necessary, one or more of the less important colours may be approximated or omitted if it seems that the inclusion of those colours will make it difficult to minimise the number of palette inks. The required colours may also be altered according to the difficulty in obtaining the colours. Thus, if necessary, one or more colours may be approximated or omitted if it is difficult to obtain, either because of the number of suppliers involved or the substrates and printing processes required. Usually, it will only become apparent that the list of required colours requires alteration once one or more groups of possible palette inks have been already tested.

The invention will now be illustrated, by reference to the following example of the invention.

An audit was carried out of all the brands and the range of packaging using those brands for a particular company. This was done by viewing the artwork for each type of branded packaging. Each artwork records the different process and spot inks for that item in electronic form.

A first print run of inks identified in the audit was then carried out, and the colours of the printed inks were checked against the colours on approved current packaging using spectrography to ensure that the colours of the inks listed in the artwork match the approved colours.

The different colours used in the branded packaging were then reviewed visually to assess the distinct brand colours. These are the colours which define the brand, and which need to be reproduced accurately and in printable form.

The different text colours and the graphical colours were also reviewed visually.

The colours of the inks were then listed in order of priority, starting with the brand colours, followed by the brand text colours and then the colours used in the general text and colour ways. The graphical colours may be listed with the brand colours or with the brand text colours, depending on their importance to the brand. The brand and brand text colours are usually spot colours, whereas the graphical colours are usually (but not always) in the process range of colours. The colours used in the general text and colour ways are usually spot colours, but again this is not always the case. The complexity of producing each colour is also listed

(ie, the number of suppliers involved in obtaining the ink of that colour, and the substrates and print processes required).

Once the audit was complete, known software such as Gretag Macbeth Color Picker' software was used to determine the minimum number of printing inks ('palette inks') which can be mixed to obtain the required colours.

'Gretag Macbeth Color Picker' software is a known software package. Gretag Macbeth Inc. has now been acquired by X-Rite Inc. As a result, the Gretag Macbeth range has been re-branded, and the 'Gretag Macbeth Color Picker' software is now being sold by X-Rite under the name 'ColorPicker'. It can be obtained from the website www.X-rite.com.

According to the website www.X-rite.com, "based on a selected profile, the 'ColorPicker' software provides an accurate display of measured and composed colours, showing how well colours can be reproduced by the output device.....You can fine-tune colours in the source colour space (grey, RGB, CMYK and multi-colour) or device independent LCH space, as well as compare colour variations using ΔE, ΔE 94 and ΔE CMC calculations."

A provisional palette of up to 8 ink colours was entered into the software as La°b° values. The La°b° value for any colour can be obtained using a spectrophotometer. The palette will usually consist of 4 spot colour inks and 3 or 4 process colour inks. The spot colour inks were selected from the brand and text colours which have been identified in the audit, with the brand colours being given priority. The process colour inks were selected based on the graphical colours which have been identified in the audit. These two are interdependent, and the spot colour inks selected may vary depending on the process colour inks which have been selected.

The software then calculates all the colours which can be obtained by mixing the palette colours. This is called the 'gamut'.

The software then compares each of the colours listed in the audit with the gamut to see how close a match can be obtained. For each colour, the software lists the various possible combinations of palette colours, together with a ΔE value, which indicates how close each combination is to the target colour.

Using this information, the user can then select a different set of palette ink colours to be tested by the software. This process can be repeated until a set of palette inks is obtained which will produce the required colours to within a specified maximum ΔE value.

If necessary, colours of low importance and/or high difficulty can be approximated or eliminated in order to assist in the choice of the palette inks.

Once the palette inks have been finalised, the palette was then profiled electronically on a press accurate proofing device to create the palette's gamut. The gamut was checked to ensure that it encapsulates all the required colours in a printable form, and, if necessary, fine tuned.

## Claims

1. A process for use in printing a range of branded packaging, the process comprising the steps of:
a. identifying each of the inks presently used in printing the range of branded packaging by obtaining this information from the artwork for each item in the range of branded packaging;
b. selecting a palette of inks consisting of a group of possible spot inks and a group of possible process inks, and testing possible combinations of those inks to see how closely it is possible to match the colours of the identified inks to within a specified tolerance;
c. specifying the colours which are required to be reproduced when printing the range of branded packaging either by deciding that they should be the same as the colours of the identified inks or by omitting one of the inks or approximating one or more of the colours of the identified inks;
d. selecting a palette of inks consisting of a group of possible spot inks and a group of possible process inks, and testing possible combinations of those inks to see how closely it is possible to match the required colours to within the specified tolerance, taking into account the results of the previous test when selecting the inks to be tested; and
e. repeating steps c and d until a palette of inks has been obtained which consists of the minimum number of inks which can be can be mixed to obtain the required colours to within the specified tolerance.

2. A process according to claim 1, comprising the further step of listing the identified inks in order of the decreasing importance of the colours of those inks to the brand.

3. A process according to claim 2, wherein the inks which are allocated primary importance are the inks having colours which define the brand.

4. A process according to claim 3, wherein the inks which are allocated secondary importance are the Inks having colours which are used in the text of the brand.

5. A process according to claim 4, wherein the inks which are allocated tertiary importance are the inks having colours which are used in the general text and in the colour ways.

6. A process according to claim 5, wherein the inks having colours which are used in the graphical elements of the brand are allocated either primary or secondary importance.

7. A process according to any preceding claim, wherein the spot inks are selected from the spot inks which have been identified in the range of branded packaging.

8. A process according to claim 7, wherein priority is given to the spot inks having colours which are most important to the brand when selecting the inks to be tested.

9. A process according to any preceding claim, wherein the process inks are selected from the process inks having colours which must be mixed to obtain the graphical colours identified in the range of branded packaging.

10. A process according to claim 9, wherein priority is given to the graphical colours which are most important to the brand when selecting the colours of the inks to be tested.

11. A process according to any preceding claim, wherein the spot inks selected are altered to take into account the process inks which have been selected.

12. A process according to any preceding claim, wherein the required colours are altered according to their order of importance, or the difficulty in obtaining the inks having those colours.

## Patentansprüche

1. Verfahren zur Bedrucken einer Mehrzahl an Packmitteln mit einer Marke, das Verfahren aufweisend die Schritte:
a. Identifizieren jeder der aktuell zum Bedrucken der Mehrzahl an Packmittein mit einer Marke verwendeten Druckfarben durch die Ermittlung dieser Informationen aus der Druckvorlage für jeden Bestandteil zum Bedrucken der Mehrzahl an Packmitteln mit einer Marke;
b. Auswahl einer Farbpalette bestehend aus einer Gruppe möglicher Schmuckfarben und einer Gruppe möglicher Prozessfarben, und Testen möglicher Kombinationen dieser Druckfarben um zu sehen, wie genau es möglich ist, die Farben der identifizierten Druckfarben innerhalb einer vorgegeben Toleranz zu erreichen;
c. Bestimmen der Farben, die zum Bedrucken der Mehrzahl an Packmitteln mit einer Marke reproduziert werden müssen, entweder durch Entscheiden, dass diese die gleichen Farben wie die identifizierten Druckfarben sein müssten, oder durch Weglassen einer der Druckfarben oder durch Annähern einer oder mehrerer der Farben der identifizierten Druckfarben.
d. Auswahl einer Farbpalette bestehend aus einer Gruppe möglicher Schmuckfarben und einer Gruppe möglicher Prozessfarben, und Testen möglicher Kombinationen dieser Druckfarben um zu sehen, wie genau es möglich ist, die Farben der identifizierten Druckfarben innerhalb der vorgegeben Toleranz zu erreichen, unter Berücksichtigen der Ergebnisse des ersten Tests bei der Auswahl der Farben, die getestet werden; und
e. Wiederholen der Schritte c und d bis eine Farbpalette erreicht wird, die aus der Minimalanzahl der Druckfarben besteht, die gemischt werden können, um die benötigten Farben innerhalb der vorgegeben Toleranz zu erhalten.

2. Verfahren nach Anspruch 1, außerdem aufweisend den Schritt des Auflistens der identifizierten Druckfarben in absteigender Wichtigkeit der Farben dieser Druckfarben für die Marke.

3. Verfahren nach Anspruch 2, wobei die der primären Wichtigkeit zugeordneten Druckfarben, die Druckfarben mit den Farben sind, die die Marke definieren.

4. Verfahren nach Anspruch 3, wobei die der sekundären Wichtigkeit zugeordneten Druckfarben, die Druckfarben mit den Farben sind, die in dem Text der Marke verwendet werden.

5. Verfahren nach Anspruch 4, wobei die der tertiären Wichtigkeit zugeordneten Druckfarben, die Druckfarben mit den Farben sind, die im allgemeinen Text und in der Farbgebung verwendet werden.

6. Verfahren nach Anspruch 5, wobei die Druckfarben Farben entweder primärer oder sekundärer Wichtigkeit besitzen, die in den grafischen Elementen der Marke verwendet werden.

7. Verfahren nach einem der vorangegangenen Ansprüche, wobei die Schmuckfarben aus den Schmuckfarben ausgewählt werden, die anhand der Mehrzahl an Packmitteln mit einer Marke identifiziert wurden.

8. Verfahren nach Anspruch 7, wobei die Schmuckfarben Priorität bei den zu testenden Druckfarben haben, welche Farben besitzen, die am wichtigsten für die Marke sind.

9. Verfahren nach einem der vorangegangenen Ansprüchen, wobei die Prozessfarben anhand von Prozessfarben mit den Farben ausgewählt werden, welche gemischt werden müssen, um die anhand der Mehrzahl an Packmitteln mit einer Marke identifizierten grafischen Farben zu erhalten.

10. Verfahren nach Anspruch 9, wobei die grafischen Farben Priorität bei den zu testenden Druckfarben haben, welche Farben besitzen, die am wichtigsten für die Marke sind.

11. Verfahren nach einem der vorangegangenen Ansprüche, wobei die ausgewählten Schmuckfarben abgeändert werden, um die gewählten Prozessfarben zu berücksichtigen.

12. Verfahren nach einem der vorangegangenen Ansprüche, wobei die benötigten Farben, anhand ihrer Eingruppierung zur Wichtigkeit oder der Schwierigkeit der Gewinnung von diese Farben besitzenden Druckfarben, abgeändert werden.

## Revendications

1. Procédé à utiliser dans l'impression d'un champ d'emballage de marque, le procédé comprenant les étapes consistant à :
a. identifier chacune des encres présentement utilisées dans l'impression du champ d'emballage de marque en obtenant ces informations depuis le travail artistique pour chaque article dans le champ d'emballage de marque ;
b. sélectionner une palette d'encres constituée d'un groupe d'encres ponctuelles possibles et d'un groupe d'encres de traitement possibles, et mettre à l'essai des combinaisons possibles de ces encres pour voir dans quelle mesure il est possible de faire concorder les couleurs des encres identifiées dans une tolérance spécifiée ;
c. spécifier les couleurs qui doivent être reproduites lors de l'impression du champ d'emballage de marque soit en décidant qu'elles doivent être les mêmes que les couleurs des encres identifiées, soit en omettant l'une des encres ou en approximant une ou plusieurs des couleurs des encres identifiées ;
d. sélectionner une palette d'encres constituée d'un groupe d'encres ponctuelles possibles et d'un groupe d'encres de traitement possibles, et mettre à l'essai des combinaisons possibles de ces encres pour voir dans quelle mesure il est possible de faire concorder les couleurs requises dans la tolérance spécifiée, en prenant en compte les résultats de l'essai précédent lors de la sélection des encres à mettre à l'essai ; et
e. répéter les étapes c et d jusqu'à ce qu'une palette d'encres ait été obtenue qui est constituée du nombre minimal d'encres qui peuvent être mélangées pour obtenir les couleurs requises dans la tolérance spécifiée.

2. Procédé selon la revendication 1, comprenant en outre l'étape consistant à énumérer les encres identifiées dans l'ordre d'importance décroissante des couleurs de ces encres pour la marque.

3. Procédé selon la revendication 2, dans lequel les encres qui se voient attribuer une importance primaire sont les encres ayant des couleurs qui définissent la marque.

4. Procédé selon la revendication 3, dans lequel les encres qui se voient attribuer une importance secondaire sont les encres ayant des couleurs qui sont utilisées dans le texte de la marque.

5. Procédé selon la revendication 4, dans lequel les encres qui se voient attribuer une importance tertiaire sont les encres ayant des couleurs qui sont utilisées dans le texte général et dans les voies de couleur.

6. Procédé selon la revendication 5, dans lequel les encres ayant des couleurs qui sont utilisées dans les éléments graphiques de la marque se voient attribuer une importance soit primaire, soit secondaire.

7. Procédé selon l'une quelconque des revendications précédentes, dans lequel les encres ponctuelles sont choisies parmi les encres ponctuelles qui ont été identifiées dans le champ d'emballage de marque.

8. Procédé selon la revendication 7, dans lequel une priorité est donnée aux encres ponctuelles ayant des couleurs qui sont les plus importantes pour la marque lors de la sélection des encres à mettre à l'essai.

9. Procédé selon l'une quelconque des revendications précédentes, dans lequel les encres de traitement sont choisies parmi les encres de traitement ayant des couleurs qui doivent être mélangées pour obtenir les couleurs graphiques identifiées dans le champ d'emballage de marque.

10. Procédé selon la revendication 9, dans lequel une priorité est donnée aux couleurs graphiques qui sont les plus importantes pour la marque lors de la sélection des couleurs des encres à mettre à l'essai.

11. Procédé selon l'une quelconque des revendications précédentes, dans lequel les encres ponctuelles choisies sont modifiées pour prendre en compte les encres de traitement qui ont été sélectionnées.

12. Procédé selon l'une quelconque des revendications précédentes, dans lequel les couleurs requises sont modifiées selon leur ordre d'importance, ou selon la difficulté d'obtention des encres ayant ces couleurs.
